# EUROPEAN PATENT SPECIFICATION

(11) **EP 4 621 978 B1**
(45) Date of publication and mention of the grant of the patent: **30.09.2026**
(21) Application number: 24880168.0
(22) Date of filing: 18.10.2024
(51) Int. Cl.: H01M 50/531, H01M 50/533, B30B 15/34, B30B 15/06, H01M 10/04, H01M 50/536

(54) **SECONDARY BATTERY ELECTRODE TAB MACHINING APPARATUS AND ELECTRODETAB MACHINING METHOD USING THE SAME**
VORRICHTUNG ZUR VERARBEITUNG VON ELEKTRODENLASCHEN EINERSEKUNDÄRBATTERIE UND VERFAHREN ZUR VERARBEITUNG VONELEKTRODENLASCHEN DAMIT
APPAREIL DE TRAITEMENT DE LANGUETTES D'ÉLECTRODE D'UNE BATTERIESECONDAIRE ET PROCÉDÉ DE TRAITEMENT DE LANGUETTES D'ÉLECTRODEL'UTILISANT

(30) Priority: 20.10.2023 KR 20230141266
(43) Date of publication of application: 24.09.2025
(73) Proprietor: LG Energy Solution, Ltd., Seoul 07335 (KR)
(72) Inventor: YOO, Su Yeon, Daejeon 34122 (KR); CHO, Woo Hyung, Daejeon 34122 (KR); LEE, Seok Kyeong, Daejeon 34122 (KR); KIM, Ye Lin, Daejeon 34122 (KR)
(74) Representative: Plasseraud IP
(86) International application number: PCT/KR2024/015843
(87) International publication number: WO 2025/084831

(56) References cited:
- JP-A- 2012 185 938
- JP-A- 2016 027 579
- KR-A- 20090 127 250
- KR-A- 20130 064 228
- KR-A- 20210 061 114

## Description

### [Technical Field]

This application claims the benefit of priority to Korean Patent Application No. 2023-0141266 filed on October 20, 2023.

The present invention relates to a secondary battery electrode tab machining apparatus and an electrode tab machining method using the same, and more particularly to a secondary battery electrode tab machining apparatus capable of selectively incising a predetermined region of each of electrode tabs and an electrode tab machining method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Particularly, in the case of a pouch-shaped secondary battery, a plurality of positive electrodes each having a predetermined size and a plurality of negative electrodes each having a predetermined size are sequentially stacked in the state in which separators are interposed therebetween, and electrode tabs or a pair of electrode leads connected to the electrode tabs protrude outward from one side or opposite sides of a case.

Meanwhile, an aluminum current collector is commonly used as a positive electrode current collector to which a positive electrode active material is applied. However, the aluminum current collector has been pointed out as a major source of ignition due to various causes, and research is underway to replace the aluminum current collector with a multilayer current collector, such as a current collector having a structure in which a resin layer is interposed between two metal layers.

When such a three-layer current collector is used, it is expected that safety can be improved because the thin metal layer has a large resistance in the event of short circuit and can quickly cut off the current flow.

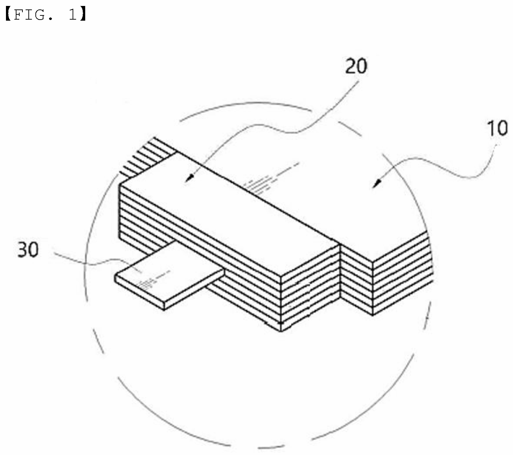

FIG. 1 is a partial schematic view of a conventional secondary battery. As shown in FIG. 1, the electrode assembly 10 has a structure in which a plurality of tabs 20 extends outward and an electrode lead 30 is interposed between the tabs 20 and fixed thereto by welding.

However, in the case of a three-layer current collector, it is difficult to couple the electrode tabs to the electrode lead by general welding methods because the resin layer is provided in the middle.

In this regard, the applicant has filed a secondary battery electrode assembly configured such that incision lines are provided in an electrode tab, a metal foil extends through the incision lines in a zigzag fashion, and an electrode lead is welded to the metal foil and the electrode tab, whereby the electrode tab can be securely fixed to the electrode lead, and a battery cell including the same.

JP2016027579A discloses a known electrode tab machining apparatus with upper and lower jigs.

However, there is a disadvantage that worker's skill is required to incise only a part of the electrode tab and to allow a metal foil to extend through the incision line.

### (Prior Art Documents)

(Patent Document 1) Korean Patent Application Publication No. 2022-0124358
(Patent Document 2) Korean Patent Application Publication No 2023-0020177
(Patent Document 3) Korean Patent Application No. 2023-0124641

### [Disclosure]

### [Technical Problem]

The present invention has been made in view of the above problems, and it is an object of the present invention to provide a secondary battery electrode tab machining apparatus capable of machining an electrode tab regardless of the skill level of a worker when connecting electrode tabs each having a resin layer interposed between metal layers and a metal foil to each other and an electrode tab machining method using the same.

### [Technical Solution]

An electrode tab machining apparatus according to the present invention to accomplish the above object, which is an electrode tab machining apparatus for forming a connection portion by incising a predetermined region of each of electrode tabs extending in one direction of an electrode current collector such that a metal foil can be connected to the electrode tabs, includes a lower jig (800) configured to be located on one surface of each of the electrode tabs and an upper jig (900) configured to be located on the other surface of each of the electrode tabs, wherein a pair of first lower flat portions (811) is located on an upper surface of the lower jig (800) so as to be spaced apart from each other in a longitudinal direction and a lower ridge (812) is provided between the pair of first lower flat portions (811), a pair of first upper flat portions (911) is located on a lower surface of the upper jig (900) so as to be spaced apart from each other in the longitudinal direction and an upper depression (912) configured to be engaged with the lower ridge (812) is provided between the pair of first upper flat portions (911), and when the electrode tabs are pressed in a state of being located between the lower jig (800) and the upper jig (900), a connection portion through which the metal foil can extend is formed by a pair of incision lines spaced apart from each other by a predetermined distance.

Also, in the electrode tab machining apparatus according to the present invention, the lower jig (800), in the upper surface thereof, may be further provided with a lower depression (822) in the longitudinal direction, and the upper jig (900), on the lower surface thereof, may be further provided with an upper ridge (922) in the longitudinal direction and configured to be engaged with the lower depression (822).

Also, in the electrode tab machining apparatus according to the present invention, the lower ridge (812) may be located in the middle of the upper surface of the lower jig (800), the lower depression (822) may be provided in a pair located on both sides of the lower ridge (812), the upper depression (912) may be located in the middle of the lower surface of the upper jig (900), and the upper ridge (922) may be provided in a pair located on both sides of the upper depression (912).

Also, in the electrode tab machining apparatus according to the present invention, the lower jig (800) may include a first lower body (810) having the lower ridge (812) and a second lower body (820) in which the lower depression (822) is located, the first lower body (810) and the second lower body (820) being detachable from each other.

Also, in the electrode tab machining apparatus according to the present invention, the upper jig (900) may include a first upper body (910) having the upper depression (912) and a second upper body (920) on which the upper ridge (922) is located, the first upper body (910) and the second upper body (920) being detachable from each other.

Also, in the electrode tab machining apparatus according to the present invention, the lower jig (800) may be further provided with a first heating member (830).

Also, in the electrode tab machining apparatus according to the present invention, the upper jig (900) may be further provided with a second heating member (930).

Also, in the electrode tab machining apparatus according to the present invention, the widthwise section of each of the lower ridge (812) and the upper depression (912) may be semicircular or semi-elliptical.

Also, in the electrode tab machining apparatus according to the present invention, the widthwise section of each of the lower depression (822) and the upper ridge (922) may be semicircular or semi-elliptical.

Also, in the electrode tab machining apparatus according to the present invention, the electrode current collector may have a multilayer structure in which a resin layer is interposed between a pair of metal layers.

In addition, an electrode tab machining method using the electrode tab machining apparatus according to the present invention includes a first step of locating electrode tabs between the lower jig (800) and the upper jig (900) and a second step of moving at least one of the lower jig (800) and the upper jig (900) to press the electrode tabs.

Also, in the electrode tab machining method according to the present invention, at least one of the lower jig (800) and the upper jig (900) may be heated prior to or during the second step.

### [Advantageous Effects]

In a secondary battery electrode tab machining apparatus according to the present invention and an electrode tab machining method using the same, a lower jig having a lower ridge provided on an upper surface thereof and an upper jig having an upper depression configured to be engaged with the lower ridge provided in a lower surface thereof are included, wherein an electrode tab is pressed in the state in which the electrode tab is located between the lower jig and the upper jig, whereby it is possible to form an incision line at a predetermined position at all times.

Also, in the secondary battery electrode tab machining apparatus according to the present invention and the electrode tab machining method using the same, the quality of machined electrode tabs is uniform regardless of the skill level of a worker because the electrode tab is located between the lower jig and the upper jig and then pressed.

Also, in the secondary battery electrode tab machining apparatus according to the present invention and the electrode tab machining method using the same, each of the lower jig and the upper jig has a structure in which a plurality of unit members is connected to each other, whereby it is possible to replace only a specific unit member, which may reduce the machining cost.

### [Description of Drawings]

FIG. 1 is a partial schematic view of a conventional secondary battery.
FIG. 2 is an exploded perspective view of a secondary battery electrode assembly according to a first embodiment of the present invention.
FIG. 3 is a sectional view of a positive electrode in the secondary battery electrode assembly according to the first embodiment of the present invention.
FIG. 4 is a top view of the secondary battery electrode assembly according to the first embodiment of the present invention.
FIG. 5 is a bottom view of the secondary battery electrode assembly according to the first embodiment of the present invention.
FIG. 6 is an enlarged exploded perspective view of part A of the electrode assembly shown in FIG. 4.
FIG. 7 is an exploded perspective view of a secondary battery electrode assembly according to a second embodiment of the present invention.
FIG. 8 is a sectional view of a negative electrode in the secondary battery electrode assembly according to the second embodiment of the present invention.
FIG. 9 is a top view of the secondary battery electrode assembly according to the second embodiment of the present invention.
FIG. 10 is a bottom view of the secondary battery electrode assembly according to the second embodiment of the present invention.
FIG. 11 is an enlarged exploded perspective view of part B of the electrode assembly shown in FIG. 9.
FIG. 12 is a perspective view of an electrode tab machining apparatus according to a first embodiment for machining an electrode tab of a secondary battery electrode assembly of the present invention.
FIG. 13 is an A-A direction sectional view of the electrode tab machining apparatus shown in FIG. 12.
FIG. 14 is a bottom perspective view of an upper jig in the electrode tab machining apparatus shown in FIG. 12.
FIG. 15 is a perspective view of an electrode tab machining apparatus according to a second embodiment for machining the electrode tab of the secondary battery electrode assembly of the present invention.
FIG. 16 is a perspective view illustrating a method of machining an electrode tab of a secondary battery electrode assembly using the electrode tab machining apparatus according to the first embodiment.
FIG. 17 is an enlarged perspective view of an electrode tab of a secondary battery electrode assembly machined by the electrode tab machining apparatus according to the first embodiment.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a secondary battery electrode tab machining apparatus according to the present invention and an electrode tab machining method using the same will be described with reference to the accompanying drawings.

First, a secondary battery electrode assembly for which the electrode tab machining apparatus according to the present invention is used will be described.

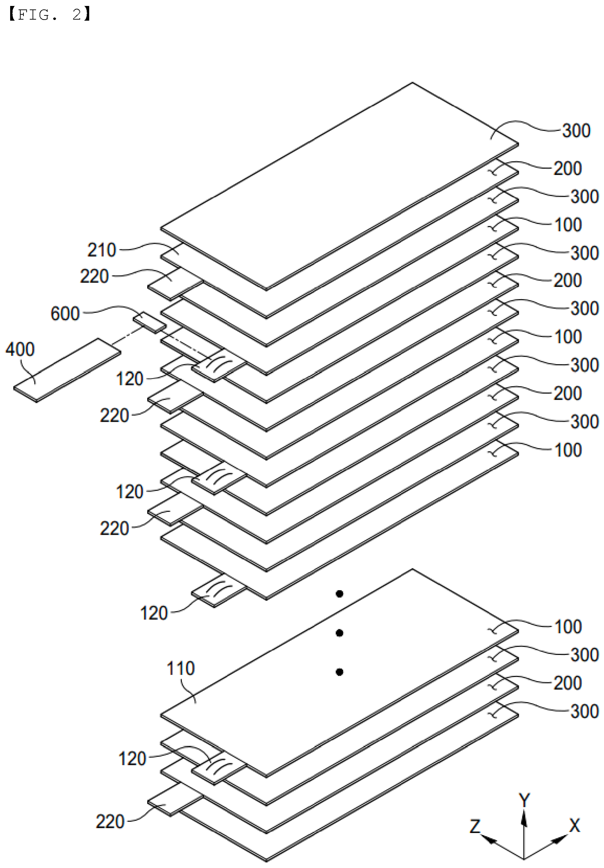

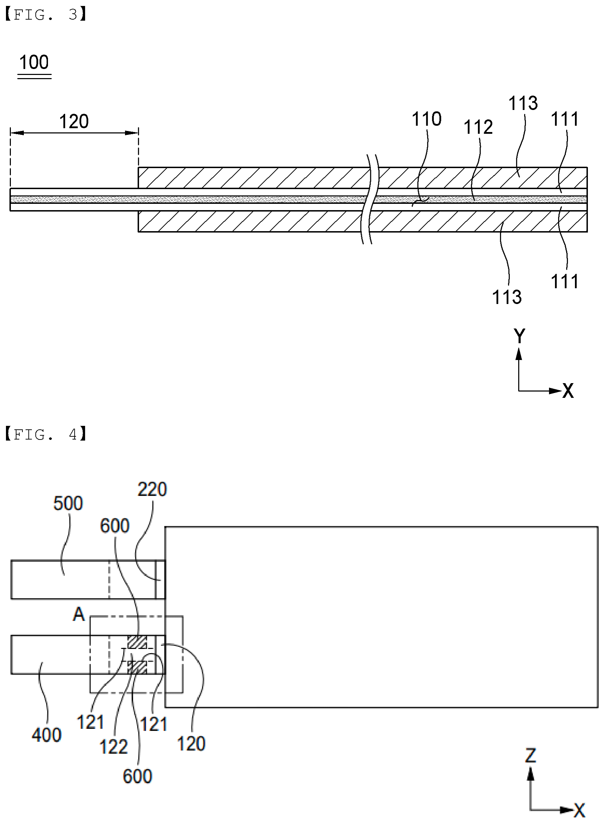

FIG. 2 is an exploded perspective view of a secondary battery electrode assembly according to a first embodiment of the present invention, and FIG. 3 is a sectional view of a positive electrode in the secondary battery electrode assembly according to the first embodiment of the present invention.

As shown in FIGs. 2 and 3, the secondary battery electrode assembly according to the present invention has a structure in which at least one positive electrode 100, at least one negative electrode 200, and at least one separator 300 are stacked.

Specifically, the separator 300 may be located between the positive electrode 100 and the negative electrode 200, on an upper surface of the uppermost negative electrode 200, or under the lowermost negative electrode 200; however, the present invention is not necessarily limited thereto.

In addition, a positive electrode lead 400 is electrically connected to the positive electrode 100, and a negative electrode lead 500 is electrically connected to the negative electrode 200. In particular, a first metal foil 600 is interposed between the positive electrode 100 and the positive electrode lead 400, which will be described in detail later.

First, the positive electrode 100 may include a positive electrode current collector 110 and a positive electrode tab 120. In the first preferred embodiment of the present invention, the positive electrode current collector 110 has a three-layer structure in which a first resin layer 112 is interposed between a pair of aluminum layers 111.

Here, each of the aluminum layers has a thickness of approximately 0.5 to 2 µm, and the first resin layer is made of polyethylene terephthalate (PET) and has a thickness of approximately 5 to 10 µm; however, the present invention is not necessarily limited thereto.

Stainless steel, aluminum, nickel, titanium, sintered carbon, or aluminum or stainless steel, the surface of which is treated with carbon, nickel, titanium, or silver, may be used instead of aluminum, as long as it is possible to exhibit high conductivity while not inducing any chemical change in a battery. In addition, a micro-scale uneven pattern may be formed on the surface thereof so as to increase adhesion of a positive electrode active material, or various forms, such as a film, a sheet, a foil, a net, a porous body, a foam body, and a non-woven fabric body, may be used.

Each of an upper surface and a lower surface of the pair of aluminum layers 111 exposed to the outside is provided with a positive electrode active material layer 113.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe:(MoO₄)₃, or LiNiₓMn₂₋ₓO₄ (0.01 ≤ x ≤ 0.6) may be used as the positive electrode active material.

In addition, the positive electrode active material may be mixed with a conductive agent and a binder, and a filler may be further added as needed. Since the conductive agent, the binder, and the filler are known materials, a detailed description thereof will be omitted.

Meanwhile, an uncoated portion (not shown) of the positive electrode current collector 110 where no positive electrode active material layer is formed is punched into a predetermined shape to form a positive electrode tab 120.

The negative electrode 200 may include a negative electrode current collector 210 and a negative electrode tab 220. The negative electrode current collector 210 is generally manufactured so as to have a thickness of 3 to 500 µm. The negative electrode current collector is not particularly restricted as long as the negative electrode current collector exhibits high conductivity while the negative electrode current collector does not induce any chemical change in a battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

In addition, the negative electrode current collector may have a micro-scale uneven pattern formed on the surface thereof in order to increase adhesion of a negative electrode active material, or may be configured in any of various forms, such as a film, a sheet, a foil, a net, a porous body, a foam body, and a non-woven fabric body.

Each of an upper surface and a lower surface of the negative electrode current collector 210 is provided with a negative electrode active material layer. As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe_{1-xM}e'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, the negative electrode active material may be further mixed with a conductive agent and a binder to form the negative electrode active material layer. Since the conductive agent and the binder are known materials, a detailed description thereof will be omitted.

Meanwhile, an uncoated portion (not shown) of the negative electrode current collector 210 where no negative electrode active material layer is formed is punched into a predetermined shape to form a negative electrode tab 220.

The separator 300 prevents short circuit between the positive electrode 100 and the negative electrode 200 and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

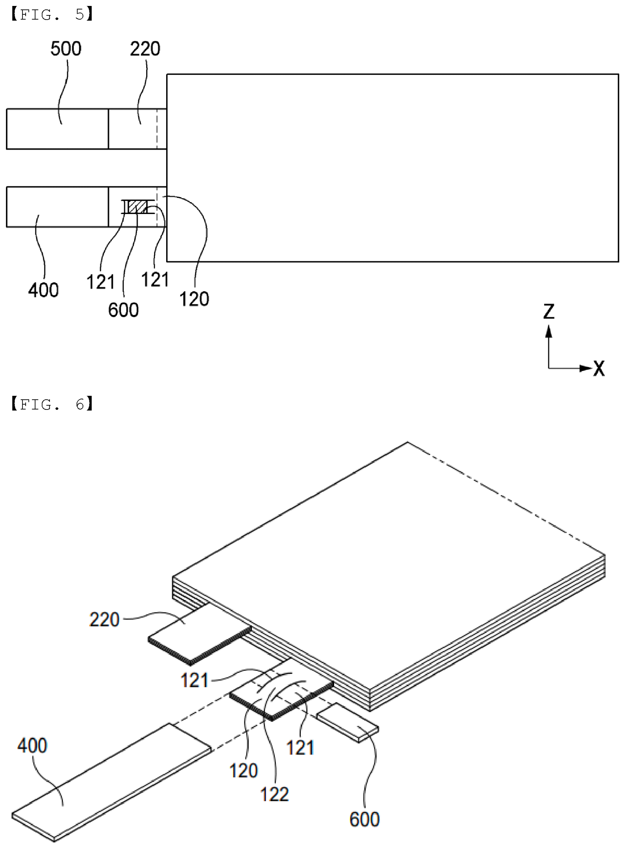

FIG. 4 is a top view of the secondary battery electrode assembly according to the first embodiment of the present invention, FIG. 5 is a bottom view of the secondary battery electrode assembly according to the first embodiment of the present invention, and FIG. 6 is an enlarged exploded perspective view of part A of the electrode assembly shown in FIG. 4.

The electrical connection structure between the positive electrode tabs 120 and the positive electrode lead 400 will be described with reference to FIGs. 2 to 6.

In general, a positive electrode tab is only made of metal and may be coupled to a positive electrode lead by ultrasonic welding or the like. However, as described above, each of the positive electrode current collector and the positive electrode tab according to the first embodiment of the present invention has a structure in which the first resin layer is interposed between the pair of aluminum layers. That is, it is difficult to firmly fix a plurality of positive electrode tabs to each other and to firmly fix the positive electrode tabs and the positive lead to each other by ultrasonic welding due to the first resin layer constituting each positive electrode tab.

In the first embodiment of the present invention, therefore, a first incision line 121 and a first connection portion 122 are formed at each of the positive electrode tabs 120 in an overall length direction (X-axis direction), and the first metal foil 600 is disposed so as to extend through the first incision line 121.

More specifically, two first incision lines 121 are provided at each of the positive electrode tabs 120 in the overall length direction (X-axis direction) so as to be parallel to each other while being spaced apart from each other by a predetermined distance, and the first connection portion 122 is formed by the first incision lines 121.

At this time, the first connection portion 122 is preferably slightly convex upward such that the first metal foil 600 can easily extend through the first incision lines 121, and an apparatus and method for performing machining such that the structure is formed will be described later.

Meanwhile, both ends of each of the first incision lines 121 are preferably located in the positive electrode tab 120 such that the first metal foil 600 extending through the first incision line 121 is not separated from the positive electrode tab.

When the first metal foil 600 extends through one of the two first incision lines 121 and then extends through the other first incision line 121, the first metal foil 600 is exposed at both edges of the positive electrode tab 120 in a width direction (Z-axis direction) while the first connection portion 122 is located in the center (see FIG. 4).

On the other hand, the first metal foil 600 is not exposed on both edges of the rear surface of the positive electrode tab 120 in the width direction (Z-axis direction) but is exposed at the middle part of the positive electrode tab (see FIG. 5).

As a result, the positive electrode tabs 120 form a tab bundle by the first metal foil 600 because the first metal foil 600 is formed in the shape of a ribbon extending through the two first incision lines 121 in a zigzag fashion.

The positive electrode lead 400 is in tight contact with a part of the positive electrode tab 120 and a part of the first metal foil 600, and is fixed thereto by ultrasonic welding.

At this time, the positive electrode lead 400 preferably faces the surface where the first metal foil 600 is exposed on both edges of the positive electrode tab 120 in the width direction (Z-axis direction), because coupling and fixing between both edges of the positive electrode tab 120 in the width direction (Z-axis direction) and the positive electrode lead 400 is more effective in inhibiting the movement in the width direction (Z-axis direction).

Of course, it is obvious that the first metal foil 600 contributes to the positive electrode tabs 120 and the positive electrode lead 400 being electrically connected to each other.

Meanwhile, the first metal foil 600 is preferably made of the same aluminum material as the aluminum layer 111, but the material may be changed as long as the same function can be performed.

In addition, the length of the first metal foil 600 preferably does not exceed the width of the positive electrode tab 120, and the width of the first metal foil 600 is preferably slightly less than the length of the first incision line 121.

The positive electrode lead 400 is preferably made of aluminum; however, the present invention is not necessarily limited thereto.

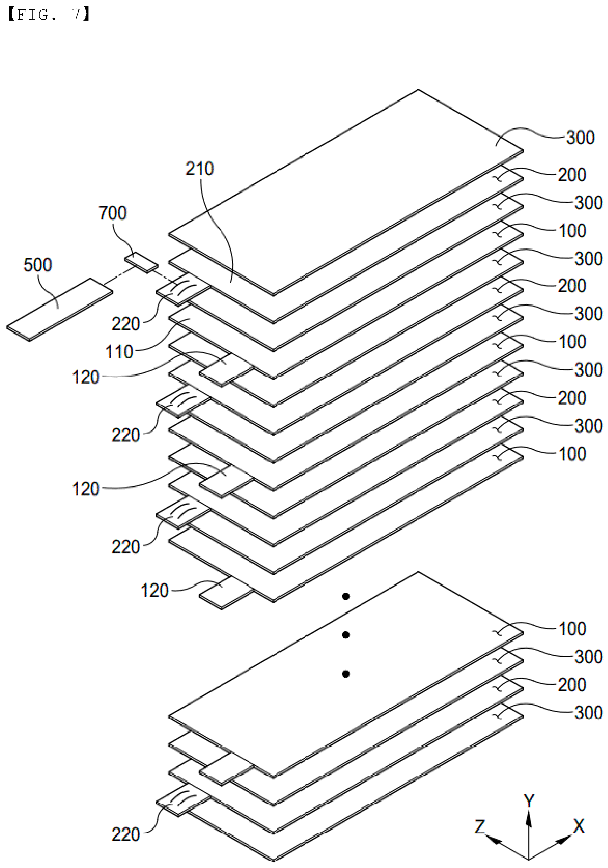

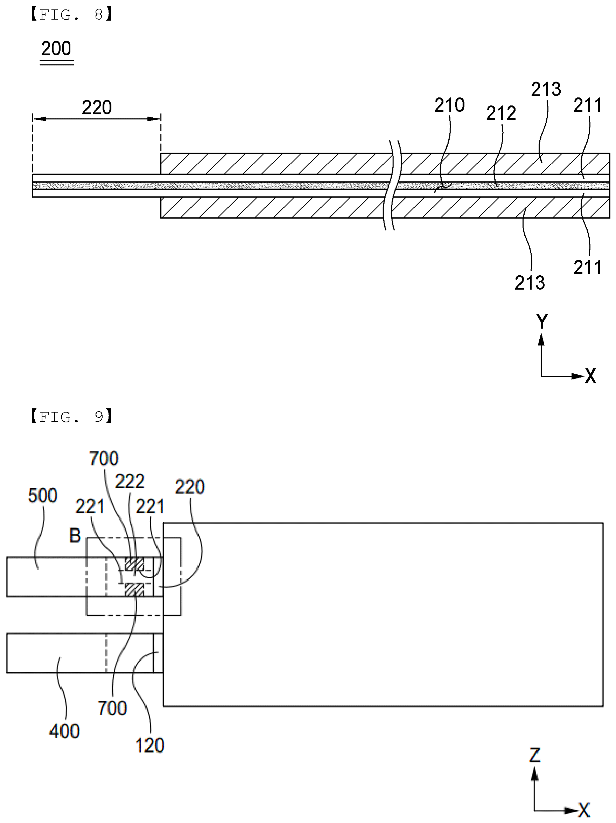

FIG. 7 is an exploded perspective view of a secondary battery electrode assembly according to a second embodiment of the present invention, and FIG. 8 is a sectional view of a negative electrode in the secondary battery electrode assembly according to the second embodiment of the present invention.

The secondary battery electrode assembly according to the second embodiment of the present invention has a structure in which at least one positive electrode 100, at least one negative electrode 200, and at least one separator 300 are stacked, in the same manner as in the first embodiment.

However, in the second embodiment, the negative electrode 200 has a three-layer structure, and a second metal foil 700 is interposed between the negative electrode 200 and a negative electrode lead 500, unlike the first embodiment; therefore, a duplicate description will be omitted and only different configurations will be described.

The negative electrode 200 may include a negative electrode current collector 210 and a negative electrode tab 220. In the second preferred embodiment of the present invention, the negative electrode current collector 210 has a three-layer structure in which a second resin layer 212 is interposed between a pair of copper layers 211.

Here, each of the copper layers has a thickness of approximately 0.5 to 2.0 µm, and the second resin layer is made of polyethylene terephthalate (PET) and has a thickness of approximately 3 to 10 µm; however, the present invention is not necessarily limited thereto.

Of course, stainless steel or the like may be used instead of copper as long as it is possible to exhibit high conductivity while not inducing any chemical change in a battery.

Each of an upper surface and a lower surface of the pair of copper layers 211 exposed to the outside is provided with a negative electrode active material layer 213. A negative electrode active material has been described previously, and therefore a description thereof will be omitted.

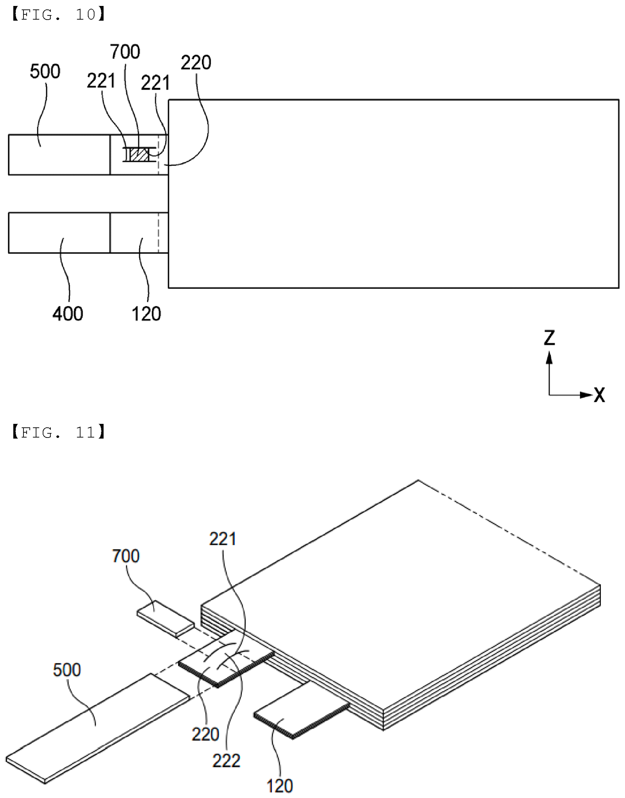

FIG. 9 is a top view of the secondary battery electrode assembly according to the second embodiment of the present invention, FIG. 10 is a bottom view of the secondary battery electrode assembly according to the second embodiment of the present invention, and FIG. 11 is an enlarged exploded perspective view of part B of the electrode assembly shown in FIG. 9.

The electrical connection structure between the negative electrode tabs 220 and the negative electrode lead 500 will be described with reference to FIGs. 7 to 11.

In general, a negative electrode tab is only made of metal and may be coupled to a negative electrode lead by ultrasonic welding or the like. However, as described above, each of the negative electrode current collector and the negative electrode tab according to the second embodiment of the present invention has a structure in which the second resin layer is interposed between the pair of copper layers. That is, it is difficult to firmly fix a plurality of negative electrode tabs to each other and to firmly fix the negative electrode tabs and the negative lead to each other by ultrasonic welding due to the second resin layer constituting each negative electrode tab.

In the second embodiment of the present invention, therefore, a second incision line 221 and a second connection portion 222 are formed at each of the negative electrode tabs 220 in the overall length direction (X-axis direction), and the second metal foil 700 is disposed so as to extend through the second incision line 221.

More specifically, two second incision lines 221 are provided at each of the negative electrode tabs 220 in the overall length direction (X-axis direction) so as to be parallel to each other while being spaced apart from each other by a predetermined distance, and the second connection portion 222 is formed by the second incision lines 221.

At this time, the second connection portion 222 is preferably slightly convex upward such that the second metal foil 700 can easily extend through the second incision lines 221, and an apparatus and method for performing machining such that the structure is formed will be described later.

Meanwhile, both ends of each of the second incision lines 221 are preferably located in the negative electrode tab 220 such that the second metal foil 700 extending through the second incision line 221 is not separated from the negative electrode tab.

When the second metal foil 700 extends through one of the two second incision lines 221 and then extends through the other second incision line 221, the second metal foil 700 is exposed at both edges of the negative electrode tab 220 in the width direction (Z-axis direction) while the second connection portion 222 is located in the center (see FIG. 9).

On the other hand, the second metal foil 700 is not exposed on both edges of the rear surface of the negative electrode tab 220 in the width direction (Z-axis direction) but is exposed at the middle part of the negative electrode tab (see FIG. 10).

As a result, the negative electrode tabs 220 form a tab bundle by the second metal foil 700 because the second metal foil 700 is formed in the shape of a ribbon extending through the two second incision lines 221 in a zigzag fashion.

The negative electrode lead 500 is in tight contact with a part of the negative electrode tab 220 and a part of the second metal foil 700, and is fixed thereto by ultrasonic welding.

At this time, the negative electrode lead 500 preferably faces the surface where the second metal foil 700 is exposed on both edges of the negative electrode tab 220 in the width direction (Z-axis direction), because coupling and fixing between both edges of the negative electrode tab 220 in the width direction (Z-axis direction) and the negative electrode lead 500 is more effective in inhibiting the movement in the width direction (Z-axis direction).

Of course, it is obvious that the second metal foil 700 contributes to the negative electrode tabs 220 and the negative electrode lead 500 being electrically connected to each other.

Meanwhile, the second metal foil 700 is preferably made of an identical or similar copper material to the copper layer 211, nickel-coated copper, or a nickel-copper alloy, but the material may be changed as long as the same function can be performed.

In addition, the length of the second metal foil 700 preferably does not exceed the width of the negative electrode tab 220, and the width of the second metal foil 700 is preferably slightly less than the length of the second incision line 221.

The negative electrode lead 500 is made of nickel; however, the present invention is not necessarily limited thereto.

Although not shown in the figures, a secondary battery electrode assembly according to a combination of the first embodiment and the second embodiment may be provided. For example, a positive electrode has a three-layer structure in which a first resin layer is interposed between a pair of aluminum layers, a negative electrode has a three-layer structure in which a second resin layer is interposed between a pair of copper layers, and a first metal foil and a second metal foil are interposed between a positive electrode tab and a positive lead and between a negative electrode tab and a negative electrode lead, respectively.

Next, an electrode tab machining apparatus for machining the positive electrode tab and the negative electrode tab such that the tabs are provided with incision lines and connection portions, namely, the positive electrode tab is provided with a first incision line and a first connection portion and the negative electrode tab is provided with a second incision line and a second connection portion will be described.

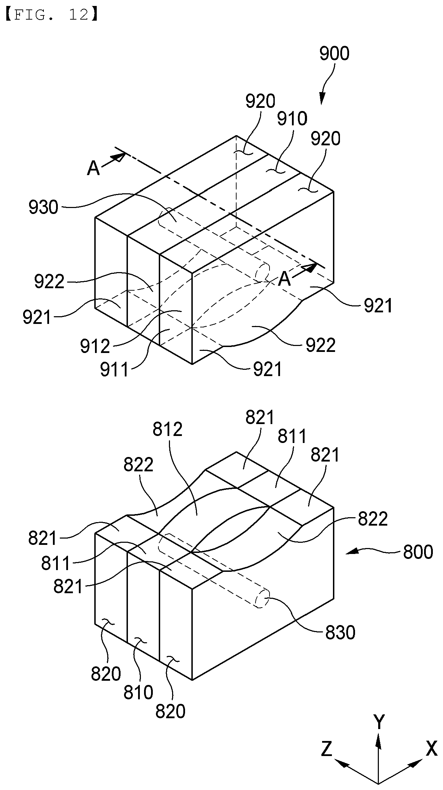

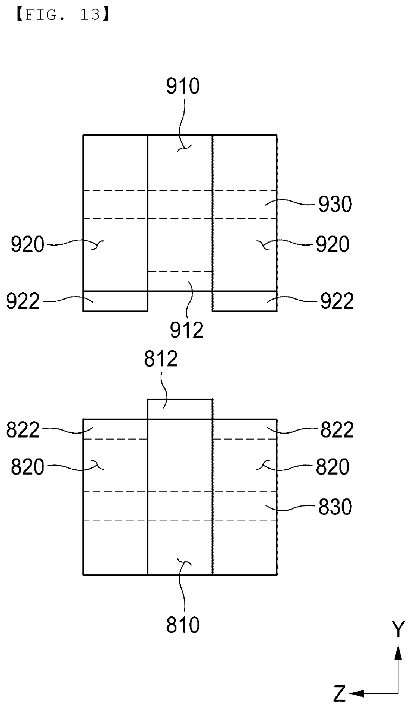

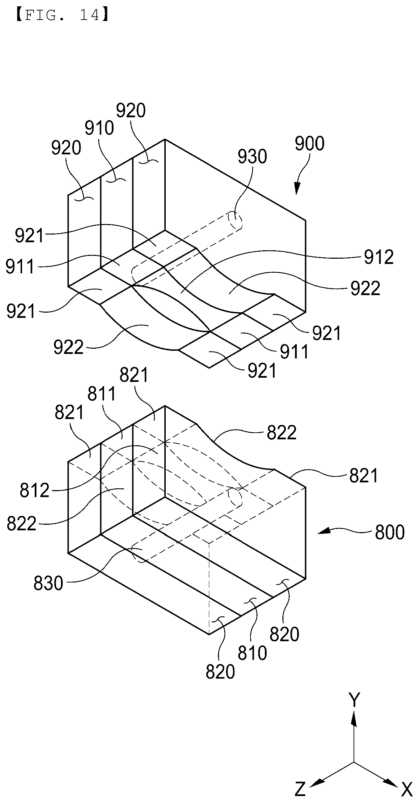

FIG. 12 is a perspective view of an electrode tab machining apparatus according to a first embodiment for machining an electrode tab of a secondary battery electrode assembly of the present invention, FIG. 13 is an A-A direction sectional view of the electrode tab machining apparatus shown in FIG. 12, and FIG. 14 is a bottom perspective view of an upper jig in the electrode tab machining apparatus shown in FIG. 12.

Referring to FIGs. 12 to 14, the electrode tab machining apparatus according to the present invention includes a lower jig 800 and an upper jig 900, each of which has the shape of a rectangular hexahedron.

One surface of each of electrode tabs to be machined is located on an upper surface of the lower jig 800, and a lower surface of the upper jig 900 is located on the other surface of each of the electrode tabs; however, the positions of the lower jig 800 and the upper jig 900 may be reversed.

First, the lower jig 800 will be described in detail. The lower jig 800 may include a first lower body 810, a second lower body 820, and a first heating element 830.

A pair of first lower flat portions 811 is located on an upper surface of the first lower body 810 so as to be spaced apart from each other in a longitudinal direction (X-axis direction), and a lower ridge 812 is provided between the pair of first lower flat portions 811, wherein the first lower flat portions 811 and the lower ridge 812 are configured to form incision lines and a connection portion of an electrode tab.

Here, the widthwise section (XY-plane) of the lower ridge 812 is preferably semicircular or semi-elliptical.

The second lower body 820 may be provided in a pair, one on each side of the first lower body 810, a pair of second lower flat portions 821 may be located on an upper surface of the second lower body so as to be spaced apart from each other in the longitudinal direction (X-axis direction), and a lower depression 822 may be provided between the pair of second lower flat portions 821.

Here, the widthwise section (XY-plane) of the lower depression 822 is preferably semicircular or semi-elliptical.

The first lower body 810 and the second lower body 820 are preferably configured to be detachable such that only a specific lower body can be replaced as needed. For example, bolts and nuts (not shown) inserted through the first lower body 810 and the second lower body 820 may be used to fix the bodies or to separate and replace the bodies; however, any means other than the bolts and nuts may be used as long as the bodies can be separably fixed.

The first heating member 830 may be disposed so as to extend through the first lower body 810 and the second lower body 820, and is configured to heat the electrode tab to a predetermined temperature when forming the incision lines and the connection portion of the electrode tab.

As described above, it is advantageous that the connection portion protrudes slightly convexly upward in order to facilitate fastening of the metal foil, and therefore it is desirable to machine the electrode tab while heating the electrode tab to a predetermined temperature such that the electrode tab can be slightly elongated.

Although the figures show the first heating member 830 as being disposed so as to extend through the first lower body 810 and the second lower body 820, the first heating member 830 may not be disposed so as to extend through the first lower body 810 and the second lower body 820 as long as the first lower body and the second lower body can be heated.

Next, the upper jig 900 will be described in detail. The upper jig 900 may include a first upper body 910, a second upper body 920, and a second heating member 930.

A pair of first upper flat portions 911 is located on a lower surface of the first upper body 910 so as to be spaced apart from each other in the longitudinal direction (X-axis direction), and an upper depression 912 configured to be engaged with the lower ridge 812 of the first lower body 810 is provided between the pair of first upper flat portions 911. In this case, the widthwise section (XY-plane) of the upper depression 912 is preferably a semicircular or semi-elliptical shape identical to the lower ridge 812.

The second upper body 920 may be provided in a pair, one on each side of the first upper body 910, a pair of second upper flat portions 921 may be located on a lower surface of the second upper body so as to be spaced apart from each other in the longitudinal direction (X-axis direction), and an upper ridge 922 configured to be engaged with the lower depression 822 of the second lower body 820 may be provided between the pair of second upper flat portions 921 in the longitudinal direction (X-axis direction).

Here, the widthwise section (XY-plane) of the upper ridge 922 is preferably a semicircular or semi-elliptical shape identical to the widthwise section of the lower depression 822.

The first upper body 910 and the second upper body 920 are preferably configured to be detachable such that only a specific upper body can be replaced as needed. For example, bolts and nuts (not shown) inserted through the first upper body 910 and the second upper body 920 may be used to fix the bodies or to separate and replace the bodies; however, any means other than the bolts and nuts may be used as long as the bodies can be separably fixed.

The second heating member 930 may be disposed so as to extend through the first upper body 910 and the second upper body 920, and is configured to heat the electrode tab to a predetermined temperature when forming the incision lines and the connection portion of the electrode tab.

As described above, the connection portion advantageously protrudes slightly convexly upward in order to facilitate fastening of the metal foil, and therefore it is desirable to machine the electrode tab while heating the electrode tab to a predetermined temperature such that the electrode tab can be slightly elongated.

Although the figures show the second heating member 930 as being disposed so as to extend through the first upper body 910 and the second upper body 920, the second heating member 930 may not be disposed so as to extend through the first upper body 910 and the second upper body 920 as long as the first upper body and the second upper body can be heated.

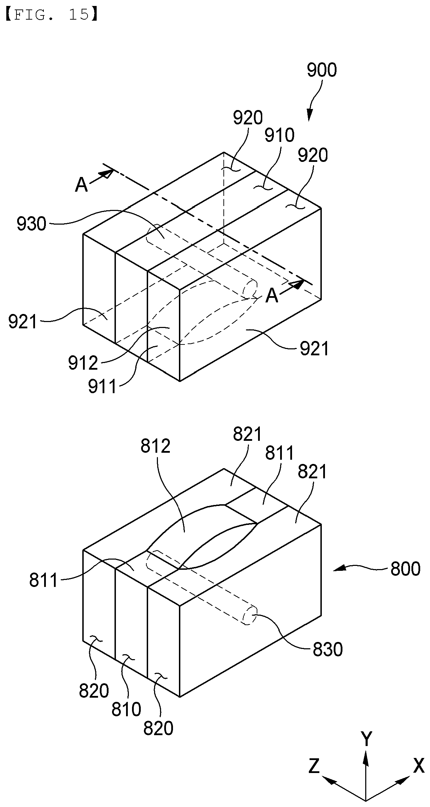

FIG. 15 is a perspective view of an electrode tab machining apparatus according to a second embodiment for machining the electrode tab of the secondary battery electrode assembly of the present invention. The electrode tab machining apparatus according to the second embodiment is identical to the electrode tab machining apparatus according to the first embodiment described above except for the configuration of a second lower body and a second upper body.

In the electrode tab machining apparatus according to the second embodiment, an upper surface of the second lower body 820 is flat, and a lower surface of the second upper body 920 is also flat.

Next, an electrode tab machining method using the electrode tab machining apparatus according to the first embodiment will be described.

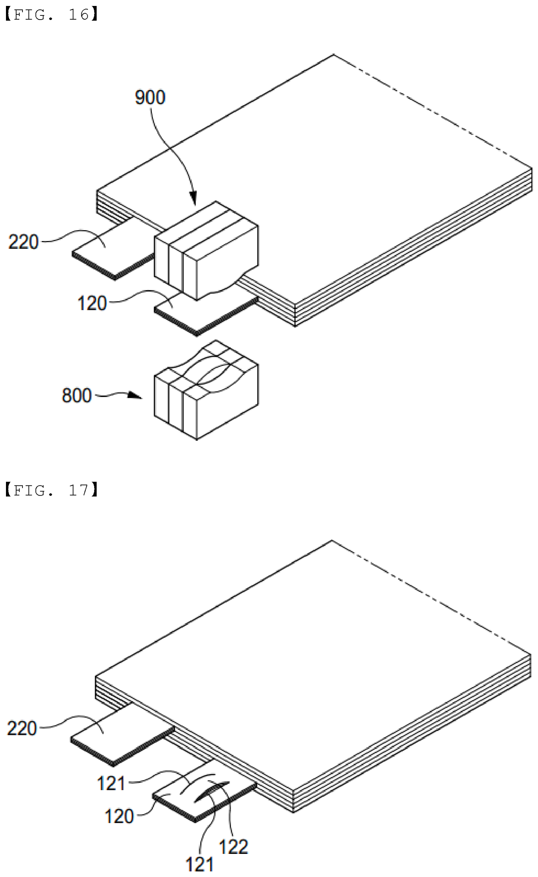

FIG. 16 is a perspective view illustrating a method of machining an electrode tab of a secondary battery electrode assembly using the electrode tab machining apparatus according to the first embodiment, and FIG. 17 is an enlarged perspective view of an electrode tab of a secondary battery electrode assembly machined by the electrode tab machining apparatus according to the first embodiment.

Referring to FIGs. 12, 16, and 17, the electrode tab machining method according to the present invention includes a first step of locating electrode tabs between the lower jig 800 and the upper jig 900 and a second step of moving at least one of the lower jig 800 and the upper jig 900 to press the electrode tabs.

The first step is a step of locating the lower jig 800 on a lower surface of a positive electrode tab 120 and locating the upper jig 900 on an upper surface of the positive electrode tab, wherein the first lower body 810 and the first upper body 910 are located so as to overlap the parts where first incision lines 121 and a first connection portion 122 are to be formed.

The second step is a step of upwardly moving the lower jig 800, downwardly moving the upper jig 900, or upwardly moving the lower jig and downwardly moving the upper jig at the same time to press the positive electrode tab 120.

When the lower jig 800 and the upper jig 900 are engaged with each other, the first connection portion 122 is machined so as to be slightly convex upward to facilitate extension of a first metal foil through the first incision lines 121.

Specifically, both sides of the lower ridge 812 of the first lower body 810 and the insides of the upper ridges 922 of the pair of second upper bodies 920 act as block-type cutters, whereby the first incision lines 121 are formed at the position where they intersect each other.

In addition, the first connection portion 122 overlapping the lower ridge 812 of the first lower body 810 has an upwardly convex shape similar to the shape of the lower ridge 812, and as a result, a gap is formed in the first connection portion 122 relative to the first incision lines 121 such that the first metal foil can easily extend through the first incision lines 121.

It is more preferable to heat at least one of the lower jig 800 and the upper jig 900 prior to or during the second step.

For example, in the state in which the upper surface of the lower jig 800 is in tight contact with the lower surfaces of the electrode tabs or in the state in which the upper surface of the lower jig 800 is in tight contact with the lower surfaces of the electrode tabs and the lower surface of the upper jig 900 is in tight contact with the upper surfaces of the electrode tabs, the electrode tabs may be heated for a predetermined period of time, and then the second step may be performed.

This is advantageous for machining the first connection 122 into a slightly convex shape by providing the condition in which the electrode tabs can be elongated.

Meanwhile, although only the method for machining the positive electrode tab using the electrode tab machining apparatus according to the first embodiment has been described, it is obvious that a negative electrode tab may be machined through the same process and that the positive electrode tab and the negative electrode tab may be machined using the electrode tab machining apparatus according to the second embodiment.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes are possible, without departing from the category and the technical idea of the present invention, and it will be obvious that such changes fall within the scope of the appended claims.

### (Description of Reference Numerals)

100: Positive electrode
110: Positive electrode current collector
111: Aluminum layer 112: First resin layer
113: Positive electrode active material layer
120: Positive electrode tab
121: First incision line 122: First connection portion
200: Negative electrode
210: Negative electrode current collector
211: Copper layer 212: Second resin layer
213: Negative electrode active material layer
220: Negative electrode tab
221: Second incision line 222: Second connection portion
300: Separator
400: Positive electrode lead
500: Negative electrode lead
600: First metal foil
700: Second metal foil
800: Lower jig
810: First lower body
811: First lower flat portion 812: Lower ridge
820: Second lower body
821: Second lower flat portion 822: Lower depression
830: First heating member
900: Upper jig
910: First upper body
911: First upper flat portion 912: Upper depression
920: Second upper body
921: Second upper flat portion 922: Upper ridge
930: Second heating member

## Claims

1. An electrode tab machining apparatus for forming a connection portion by incising a predetermined region of each of electrode tabs extending in one direction of an electrode current collector such that a metal foil can be connected to the electrode tabs, the electrode tab machining apparatus comprising:
a lower jig (800) configured to be located on one surface of each of the electrode tabs; and
an upper jig (900) configured to be located on the other surface of each of the electrode tabs, wherein
a pair of first lower flat portions (811) is located on an upper surface of the lower jig (800) so as to be spaced apart from each other in a longitudinal direction and a lower ridge (812) is provided between the pair of first lower flat portions (811),
a pair of first upper flat portions (911) is located on a lower surface of the upper jig (900) so as to be spaced apart from each other in the longitudinal direction and an upper depression (912) configured to be engaged with the lower ridge (812) is provided between the pair of first upper flat portions (911), and
when the electrode tabs are pressed in a state of being located between the lower jig (800) and the upper jig (900), a connection portion through which the metal foil can extend is formed by a pair of incision lines spaced apart from each other by a predetermined distance.

2. The electrode tab machining apparatus according to claim 1, wherein
the lower jig (800), in the upper surface thereof, is further provided with a lower depression (822) in the longitudinal direction, and
the upper jig (900), on the lower surface thereof, is further provided with an upper ridge (922) in the longitudinal direction and configured to be engaged with the lower depression (822).

3. The electrode tab machining apparatus according to claim 2, wherein
the lower ridge (812) is located in a middle of the upper surface of the lower jig (800), and the lower depression (822) is provided in a pair located on both sides of the lower ridge (812), and
the upper depression (912) is located in a middle of the lower surface of the upper jig (900), and the upper ridge (922) is provided in a pair located on both sides of the upper depression (912).

4. The electrode tab machining apparatus according to claim 3, wherein the lower jig (800) comprises a first lower body (810) having the lower ridge (812) and a second lower body (820) in which the lower depression (822) is located, the first lower body (810) and the second lower body (820) being detachable from each other.

5. The electrode tab machining apparatus according to claim 3, wherein the upper jig (900) comprises a first upper body (910) having the upper depression (912) and a second upper body (920) on which the upper ridge (922) is located, the first upper body (910) and the second upper body (920) being detachable from each other.

6. The electrode tab machining apparatus according to claim 3, wherein the lower jig (800) is further provided with a first heating member (830).

7. The electrode tab machining apparatus according to claim 3, wherein the upper jig (900) is further provided with a second heating member (930).

8. The electrode tab machining apparatus according to claim 3, wherein a widthwise section of each of the lower ridge (812) and the upper depression (912) is semicircular or semi-elliptical.

9. The electrode tab machining apparatus according to claim 3, wherein a widthwise section of each of the lower depression (822) and the upper ridge (922) is semicircular or semi-elliptical.

10. The electrode tab machining apparatus according to claim 1, wherein the electrode current collector has a multilayer structure in which a resin layer is interposed between a pair of metal layers.

11. An electrode tab machining method using the electrode tab machining apparatus according to any one of claims 1 to 10, the electrode tab machining method comprising:
a first step of locating electrode tabs between the lower jig (800) and the upper jig (900); and
a second step of moving at least one of the lower jig (800) and the upper jig (900) to press the electrode tabs.

12. The electrode tab machining method according to claim 11, wherein at least one of the lower jig (800) and the upper jig (900) is heated prior to or during the second step.

## Patentansprüche

1. Elektrodenlaschen-Bearbeitungsvorrichtung zum Ausbilden eines Verbindungsabschnitts durch Einschneiden eines vorbestimmten Bereichs jeder der Elektrodenlaschen, die sich in einer Richtung eines Elektrodenstromkollektors erstrecken, so dass eine Metallfolie mit den Elektrodenlaschen verbunden werden kann, wobei die Elektrodenlaschen-Bearbeitungsvorrichtung umfasst:
eine untere Spannvorrichtung (800), die dazu ausgelegt ist, auf der einen Fläche jeder der Elektrodenlaschen angeordnet zu werden; und
eine obere Spannvorrichtung (900), die dazu ausgelegt ist, auf der anderen Fläche jeder der Elektrodenlaschen angeordnet zu werden, wobei
ein Paar erster unterer Flachabschnitte (811) so auf einer oberen Fläche der unteren Spannvorrichtung (800) angeordnet ist, dass sie in einer Längsrichtung voneinander beabstandet sind, und zwischen dem Paar erster unterer Flachabschnitte (811) ein unterer Grat (812) vorgesehen ist,
ein Paar erster oberer Flachabschnitte (911) so auf einer unteren Fläche der oberen Spannvorrichtung (900) angeordnet ist, dass sie in der Längsrichtung voneinander beabstandet sind, und zwischen dem Paar erster oberer Flachabschnitte (911) eine obere Vertiefung (912) vorgesehen ist, die dazu ausgelegt ist, mit dem unteren Grat (812) in Eingriff zu kommen, und
wobei dann, wenn die Elektrodenlaschen in einem Zustand verpresst werden, in dem sie zwischen der unteren Spannvorrichtung (800) und der oberen Spannvorrichtung (900) liegen, ein Verbindungsabschnitt, durch den sich die Metallfolie erstrecken kann, aus einem Paar von Einschnittlinien gebildet wird, die in einem vorbestimmten Abstand voneinander beabstandet sind.

2. Elektrodenlaschen-Bearbeitungsvorrichtung nach Anspruch 1, wobei
die untere Spannvorrichtung (800) in ihrer oberen Fläche ferner mit einer unteren Vertiefung (822) in der Längsrichtung versehen ist, und
die obere Spannvorrichtung (900) auf ihrer unteren Fläche ferner mit einem oberen Grat (922) in der Längsrichtung versehen ist, der dazu ausgelegt ist, mit der unteren Vertiefung (822) in Eingriff zu kommen.

3. Elektrodenlaschen-Bearbeitungsvorrichtung nach Anspruch 2, wobei
der untere Grat (812) sich in einer Mitte der oberen Fläche der unteren Spannvorrichtung (800) befindet, und die untere Vertiefung (822) paarweise vorgesehen ist und sich auf beiden Seiten des unteren Grats (812) befindet, und
die obere Vertiefung (912) sich in einer Mitte der unteren Fläche der oberen Spannvorrichtung (900) befindet, und der obere Grat (922) paarweise vorgesehen ist und sich auf beiden Seiten der oberen Vertiefung (912) befindet.

4. Elektrodenlaschen-Bearbeitungsvorrichtung nach Anspruch 3, wobei die untere Spannvorrichtung (800) einen ersten unteren Körper (810) mit dem unteren Grat (812) und einen zweiten unteren Körper (820), in dem sich die untere Vertiefung (822) befindet, umfasst, wobei der erste untere Körper (810) und der zweite untere Körper (820) voneinander lösbar sind.

5. Elektrodenlaschen-Bearbeitungsvorrichtung nach Anspruch 3, wobei die obere Spannvorrichtung (900) einen ersten oberen Körper (910) mit der oberen Vertiefung (912) und einen zweiten oberen Körper (920), auf dem sich der obere Grat (922) befindet, umfasst, wobei der erste obere Körper (910) und der zweite obere Körper (920) voneinander lösbar sind.

6. Elektrodenlaschen-Bearbeitungsvorrichtung nach Anspruch 3, wobei die untere Spannvorrichtung (800) ferner mit einem ersten Heizelement (830) versehen ist.

7. Elektrodenlaschen-Bearbeitungsvorrichtung nach Anspruch 3, wobei die obere Spannvorrichtung (900) ferner mit einem zweiten Heizelement (930) versehen ist.

8. Elektrodenlaschen-Bearbeitungsvorrichtung nach Anspruch 3, wobei ein Querschnitt jeweils des unteren Grats (812) und der oberen Vertiefung (912) halbkreisförmig oder halbelliptisch ausgebildet ist.

9. Elektrodenlaschen-Bearbeitungsvorrichtung nach Anspruch 3, wobei ein Querschnitt jeweils der unteren Vertiefung (822) und des oberen Grats (922) halbkreisförmig oder halbelliptisch ausgebildet ist.

10. Elektrodenlaschen-Bearbeitungsvorrichtung nach Anspruch 1, wobei der Elektrodenstromkollektor eine mehrschichtige Struktur aufweist, in der eine Harzschicht zwischen einem Paar von Metallschichten angeordnet ist.

11. Elektrodenlaschen-Bearbeitungsverfahren unter Verwendung der Elektrodenlaschen-Bearbeitungsvorrichtung nach einem der Ansprüche 1 bis 10, wobei das Elektrodenlaschen-Bearbeitungsverfahren umfasst:
einen ersten Schritt des Anordnens von Elektrodenlaschen zwischen der unteren Spannvorrichtung (800) und der oberen Spannvorrichtung (900); und
einen zweiten Schritt des Bewegens von mindestens einer aus unterer Spannvorrichtung (800) und oberer Spannvorrichtung (900), um die Elektrodenlaschen zu verpressen.

12. Elektrodenlaschen-Bearbeitungsverfahren nach Anspruch 11, wobei mindestens eine aus unterer Spannvorrichtung (800) und oberer Spannvorrichtung (900) vor oder während des zweiten Schritts erhitzt wird.

## Revendications

1. Appareil d'usinage de languette d'électrode pour former une partie de connexion en incisant une région prédéterminée de chacune des languettes d'électrode s'étendant dans une direction d'un collecteur de courant d'électrode de telle sorte qu'une feuille métallique puisse être connectée aux languettes d'électrode, l'appareil d'usinage de languette d'électrode comprenant :
un gabarit inférieur (800) configuré pour être situé sur une surface de chacune des languettes d'électrode ; et
un gabarit supérieur (900) configuré pour être situé sur l'autre surface de chacune des languettes d'électrode, dans lequel
une paire de premières parties plates inférieures (811) est située sur une surface supérieure du gabarit inférieur (800) de manière à être espacée l'une de l'autre dans une direction longitudinale et une nervure inférieure (812) est prévue entre la paire de premières parties plates inférieures (811),
une paire de premières parties plates supérieures (911) est située sur une surface inférieure du gabarit supérieur (900) de manière à être espacée l'une de l'autre dans la direction longitudinale et une dépression supérieure (912) configurée pour venir en prise avec la nervure inférieure (812) est prévue entre la paire de premières parties plates supérieures (911), et
lorsque les languettes d'électrode sont pressées dans un état où elles sont situées entre le gabarit inférieur (800) et le gabarit supérieur (900), une partie de connexion à travers laquelle la feuille métallique peut s'étendre est formée par une paire de lignes d'incision espacées l'une de l'autre d'une distance prédéterminée.

2. Appareil d'usinage de languette d'électrode selon la revendication 1, dans lequel
le gabarit inférieur (800), dans sa surface supérieure, est en outre pourvu d'une dépression inférieure (822) dans la direction longitudinale, et
le gabarit supérieur (900), sur sa surface inférieure, est en outre pourvu d'une nervure supérieure (922) dans la direction longitudinale et configuré pour venir en prise avec la dépression inférieure (822).

3. Appareil d'usinage de languette d'électrode selon la revendication 2, dans lequel
la nervure inférieure (812) est située au milieu de la surface supérieure du gabarit inférieur (800), et la dépression inférieure (822) est prévue en une paire située des deux côtés de la nervure inférieure (812), et
la dépression supérieure (912) est située au milieu de la surface inférieure du gabarit supérieur (900), et la nervure supérieure (922) est prévue en une paire située des deux côtés de la dépression supérieure (912).

4. Appareil d'usinage de languette d'électrode selon la revendication 3, dans lequel le gabarit inférieur (800) comprend un premier corps inférieur (810) ayant la nervure inférieure (812) et un second corps inférieur (820) dans lequel la dépression inférieure (822) est située, le premier corps inférieur (810) et le second corps inférieur (820) étant détachables l'un de l'autre.

5. Appareil d'usinage de languette d'électrode selon la revendication 3, dans lequel le gabarit supérieur (900) comprend un premier corps supérieur (910) ayant la dépression supérieure (912) et un second corps supérieur (920) sur lequel la nervure supérieure (922) est située, le premier corps supérieur (910) et le second corps supérieur (920) étant détachables l'un de l'autre.

6. Appareil d'usinage de languette d'électrode selon la revendication 3, dans lequel le gabarit inférieur (800) est en outre pourvu d'un premier élément chauffant (830).

7. Appareil d'usinage de languette d'électrode selon la revendication 3, dans lequel le gabarit supérieur (900) est en outre pourvu d'un second élément chauffant (930).

8. Appareil d'usinage de languette d'électrode selon la revendication 3, dans lequel une section transversale de chacune de la nervure inférieure (812) et de la dépression supérieure (912) est semi-circulaire ou semi-elliptique.

9. Appareil d'usinage de languette d'électrode selon la revendication 3, dans lequel une section transversale de chacune de la dépression inférieure (822) et de la nervure supérieure (922) est semi-circulaire ou semi-elliptique.

10. Appareil d'usinage de languette d'électrode selon la revendication 1, dans lequel le collecteur de courant d'électrode a une structure multicouche dans laquelle une couche de résine est interposée entre une paire de couches métalliques.

11. Procédé d'usinage de languette d'électrode utilisant l'appareil d'usinage de languette d'électrode selon l'une quelconque des revendications 1 à 10, le procédé d'usinage de languette d'électrode comprenant :
une première étape consistant à situer des languettes d'électrode entre le gabarit inférieur (800) et le gabarit supérieur (900) ; et
une seconde étape consistant à déplacer au moins l'un du gabarit inférieur (800) et du gabarit supérieur (900) pour presser les languettes d'électrode.

12. Procédé d'usinage de languette d'électrode selon la revendication 11, dans lequel au moins l'un du gabarit inférieur (800) et du gabarit supérieur (900) est chauffé avant ou pendant la seconde étape.
